# EUROPEAN PATENT APPLICATION

(11) **EP 1 342 900 A2**
(43) Date of publication of application: **10.09.2003**
(21) Application number: 03005003.3
(22) Date of filing: 05.03.2003
(51) Int. Cl.: F02D 41/04, F02D 33/02

(54) **Stop controller for an internal combustion engine**

(30) Priority: 06.03.2002 JP 2002061023
(71) Applicant: TOYOTA JIDOSHA KABUSHIKI KAISHA, Aichi-ken 471-8571 (JP)
(72) Inventor: Kaneko, Tomohiro, Toyota-shi, Aichi-ken, 471-8571 (JP); Hanada, Hideto, Toyota-shi, Aichi-ken, 471-8571 (JP); Kawai, Takashi, Toyota-shi, Aichi-ken, 471-8571 (JP)
(74) Representative: Leson, Thomas Johannes Alois, Dipl.-Ing.

(57) **Abstract**

The invention is constructed such that an air amount and a circulated exhaust gas amount are controlled in accordance with a fuel supply when an internal combustion amount are controlled in accordance with a fuel supply when an internal combustion engine (1) is stopped. More specifically, the invention is a stop controller for an internal combustion engine (1) for controlling fuel injection such that the internal combustion engine (I) is stopped at a predetermined rotation angle position, which is provided with air intake controlling means for controlling an intake air amount at a timing of last fuel injection such that the amount is smaller than one in an idling state and prevents a misfire. Furthermore, the stop controller for an internal combustion engine (1) is provided with an exhaust gas circulation system for circulating a part of exhaust gas into an intake air side, and exhaust gas controlling means for controlling an circulated exhaust gas amount in the aforementioned exhaust gas circulation system for a last fuel injection such that the amount is smaller than the circulated amount before the last fuel injection is executed.

## Description

The invention relates to a device for controlling an internal combustion engine such as a diesel engine, so as to stop it at a targeted rotation angle position.

In order to improve startability of an internal combustion engine when it is restarted, more specifically, in order to let the internal combustion engine rapidly enter perfect ignition state in accordance with the restarting operation, a control of a stop position (a crank angle at stopping a rotation angle position) of a crankshaft of the internal combustion engine is performed when the internal combustion engine is stopped. For example, in an internal combustion engine having a structure where fuel is injected into each of a plurality of cylinders, operation state of each cylinder is determined and then fuel is injected into a cylinder which is in the compression stroke. However, in such an internal combustion engine, operation state of cylinders could not be determined if the internal combustion engine is stopped. For this reason, the stop position may be controlled by determining the operation state of cylinders immediately after the internal combustion engine has just been motored (cranked) for the subsequent restarting of the internal combustion engine.

An example of a device that executes such a control has been disclosed in Japanese Patent Laid-Open Publication No. 2001-152891. The invention disclosed in the publication has a structure in which a cylinder at the compression top dead center is identified based on the crank angle of the engine. In this invention, when the engine is stopped by operating an ignition switch, the fuel supply stop is started with a predetermined cylinder which has been determined based on the cylinder determined as the one at the top dead center. It is mentioned in the publication that the related art can determine a crank angle range where the engine stops by determining a cylinder with which the fuel supply stop is started. It is also mentioned in the publication, as a result, the related art can determine a cylinder more promptly by putting a mark for cylinder determination on a position closest to the crank angle range where the engine stops in the direction of the crankshaft rotation.

In the invention disclosed in the aforementioned publication, the engine is controlled such that a crank angle position at which the engine is stopped is placed in a predetermined range since a fuel supply stop is started from the predetermined cylinder. More specifically, inertial energy of the engine is consumed as a friction loss, pumping loss or the like even when a fuel supply has been stopped. Then the engine finally stops. In this case, a crank angle range where the engine stops can be determined by determining a cylinder with which a fuel supply stop is started, because the number of revolution of the crankshaft after the fuel supply is stopped is substantially fixed.

As mentioned in the aforementioned publication, the engine can be Stopped in a predetermined crank angle range if a fuel supply stop is started with a predetermined cylinder. However, rotation to some extent is generated by inertial force even after a fuel supply has been completely stopped. Thus, just merely stopping a fuel supply may continuously generate a decreased output torque caused by a compressed intake air and an increased output torque subsequently caused by an expanded air. Such a torque fluctuation, which is increased as intake air amount is increased, appears as vibration immediately before the engine is stopped, and thus causes the occupants to feel uncomfortable. Especially, a diesel engine having high compression ratio may cause more remarkable vibration due to the fluctuation of output torque if an intake air amount immediately after the fuel supply is stopped is relatively large.

Meanwhile, a recent internal combustion engine has an exhaust gas circulation system for reducing NOx. In an internal combustion engine of this type, circulated exhaust gas together with air is sucked into the cylinder. Thus, if the amount of circulated exhaust gas is secured as in the normal operation, the intake air amount after a fuel supply is stopped increases as mentioned above which may cause vibration immediately after the internal combustion engine is stopped.
To avoid such a problem, stopping exhaust gas circulation when a stop control of internal combustion engine has been started can be conceived. However, if exhaust gas circulation is stopped, the oxygen amount in the cylinder increases and thus fuel combustion is accelerated. Combustion noise, i.e. so-called diesel knock, caused by rapid combustion is generated, and it may make the occupants feel uncomfortable.

The invention is contrived addressing the technical problems mentioned above. It is an object of the invention to provide a stop controller capable of smoothly stopping an internal combustion engine at a targeted rotation angle position of the crankshaft without making the occupants feel uncomfortable.

The object is solved by a stop controller having the features of claim 1 and 10, respectively. A stop controller for an internal combustion engine according to the invention is characterized in that it is designed, for the purpose of achieving the goal, so as to control the amounts of air and circulated exhaust gas in accordance with fuel supply at a timing where the internal combustion engine is stopped. More specifically, the stop controller for an internal combustion engine according to the invention is a device for controlling fuel injection such that the internal combustion engine is stopped at a predetermined rotation angle position. The stop controller is provided with air intake controlling means for controlling intake air amount of the last fuel injection so that it is smaller than an amount in an idling state and prevents a misfire.

Additionally, the air intake controlling means is provided with intake air amount adjusting means capable of adjusting intake air amount sucked into the internal combustion engine. Furthermore, the air intake controlling means executes a control so as to interrupt air intake after the last fuel injection. Moreover, the internal combustion engine automatically stops if a predetermined braking condition is established, and automatically restarts if the predetermined braking condition is released. The air intake controlling means executes control of the intake air amount during a time from when the predetermined braking condition is established and until when the internal combustion engine automatically stops.

Moreover, the intake air amount controlling means is an intake valve which controls an intake air amount by opening and closing. Furthermore, the air intake controlling means controls the intake valve such that it has a predetermined opening at a predetermined timing.

Additionally, the predetermined opening is such a predetermined value such that the intake air amount is smaller than the amount for idling state and not causing a misfire. Furthermore, the predetermined opening is a value that changes according to fuel injection amount or temperature of the internal combustion engine. Furthermore, the predetermined timing is determined based on the opening of the intake valve and on the speed of opening and closing of the intake valve immediately before the intake air amount is controlled by the controlling means.

The invention is a stop controller for a internal combustion engine for controlling fuel injection such that the engine is stopped at a predetermined rotation angle position. The stop controller is provided with an exhaust gas circulation mechanism for circulating part of exhaust gas into the intake air side. The stop controller is provided further with exhaust gas controlling means for controlling exhaust gas amount circulated in the exhaust gas circulation system at a last fuel injection timing so as to make it smaller than an amount circulated before the last fuel injection.

Furthermore, the internal combustion engine automatically stops if a predetermined braking condition is established, and automatically restarts if the predetermined condition is released. And furthermore, the exhaust gas controlling means executes control of the circulated exhaust gas amount during a time period from when the predetermined braking condition is established and until when the internal combustion engine automatically stops. Moreover, the exhaust gas circulation controlling means is provided with exhaust gas amount adjusting means capable of adjusting the circulated exhaust gas amount circulated into the internal combustion engine.

Additionally, the exhaust gas controlling means controls exhaust gas circulation by means of the exhaust gas amount adjusting means by interrupting the exhaust gas circulation after the last fuel injection. Furthermore, the exhaust gas amount adjusting means is an exhaust valve for adjusting the circulated exhaust gas amount by opening and closing.

Moreover, the exhaust gas controlling means controls the exhaust valve such that it has a predetermined opening at a predetermined timing. The predetermined opening is a value predetermined such that the circulated exhaust gas amount is smaller than a circulated amount before the last fuel injection. Furthermore, the predetermined opening is a value that changes according to fuel injection amount or temperature of the internal combustion engine. Moreover, the predetermined timing is determined based on the opening of the exhaust valve and the speed of opening and closing of the exhaust valve immediately before they are controlled by the exhaust gas controlling means.

FIG. 1 is a flowchart describing an example of control executed by a controller according to the invention;

FIG. 2 is a time chart shown in crank angle describing a stop timing of fuel injection according to a stop request;

FIG. 3 is a time chart showing fluctuations in the openings of the intake throttle valve and the EGR valve according to the invention, as well as fluctuations in the engine speed;

FIG. 4 is a block diagram schematically showing the control system of the internal combustion engine according to the invention;

FIG. 5 is a diagram schematically showing an example of fuel pump;

FIG. 6 is a schematic view showing an example of crank angle sensor; and

FIG. 7 is a schematic view showing an example of crank angle datum position sensor.

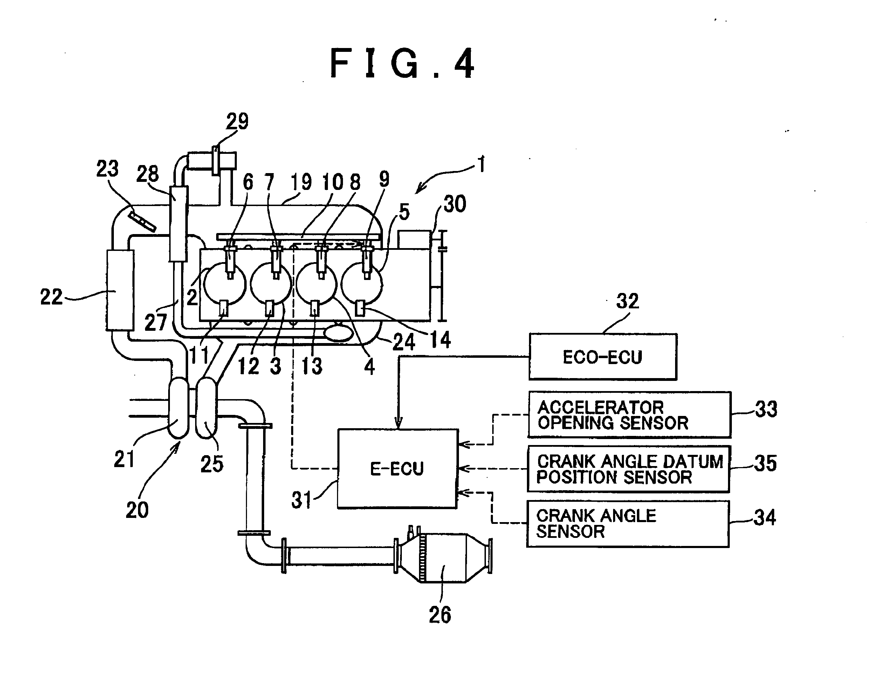

Hereafter, the invention will be described based on the embodiments. An internal combustion engine according to the invention is an internal combustion engine capable of stopping and restarting automatically by starting and stopping a supply of fuel and air, or by turning on and off the ignition or the like. Examples of such an internal combustion engine arc diesel engines, gasoline engines, and gas-fueled engines. FIG. 4 shows a diesel engine as an example of an internal combustion engine (engine) 1. The example shown in the figure is an engine of so-called direct injection type which directly injects fuel into cylinders 2, 3, 4, 5, provided with an exhaust gas re-circulation system (EGR) for cleaning exhaust gas. Please assume that the cylinders in FIG. 4 are referred to as #1 cylinder 2, #2 cylinder 3, #3 cylinder 4 and #4 cylinder 5, starting from the left most one. The cylinders reach the compression top dead center in the order of #1 cylinder 2, #3 cylinder 4, #4 Cylinder 5, and #2 cylinder 3.

The cylinders 2, 3, 4 and 5 are provided with an injector 6, 7, 8 and 9, respectively, which is for injecting fuel under high pressure. The injectors 6, 7, 8 and 9 are connected to a common rail 10 for holding temporarily the fuel that has been pressurized to high pressure. The cylinders 2, 3, 4 and 5 are provided with a glow 11, 12, 13 and 14, respectively.

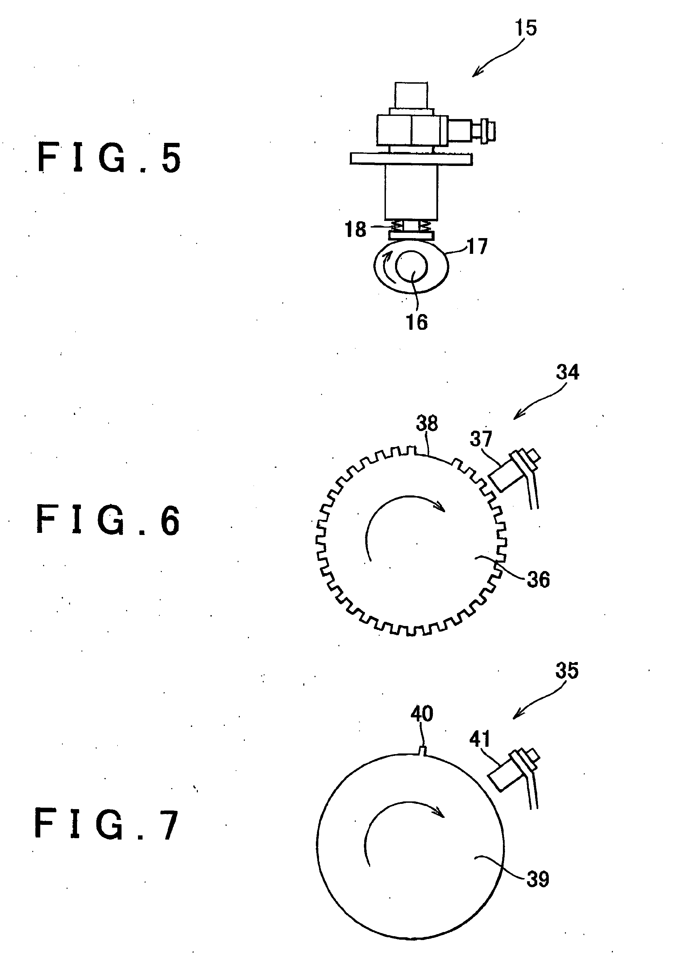

As shown in FIG. 5, a fuel pump 15 for pressurizing fuel is a so-called plunger type pump. The fuel pump 15 is pressurized by an elliptic cam 17 which rotates integrally with a cam shaft 16. The fuel pump 15 is designed so as to return by means of a return spring 18. The cam shaft 16 is designed so as to rotate one revolution while a crank shaft (not shown in the figure) rotates two revolutions. The elliptic cam 17 is designed so as to press a plunger with its both end portions of the longer axis direction. Therefore, intake and delivery of fuel by pressure are respectively executed once at every 360 degrees CA in crank angle degree (CA).

As shown in FIG. 4, an intake manifold 19, for supplying by allocating an intake air into each of the cylinders 2,3,4 and 5, is connected to a compressor 21 in an exhaust-type supercharger 20. An intercooler 22, for cooling down an intake air with an increased temperature due to pressurization, and an intake throttle valve 23, for controlling the intake air amount, are interposed in an intake passage which leads to the intake manifold 19 from the compressor 21. Please note that the intake throttle valve 23 is electrically controlled by an actuator such as a motor (not shown in the figure).

On the other hand, an exhaust manifold 24 connected to an exhaust port of each of the cylinders 2, 3, 4 and 5 is connected to an exhaust gas turbine 25 in the exhaust-type supercharger 20. Further, the exhaust gas turbine 25 is communicated with a catalytic converter 26 which is provided with an exhaust gas purifying catalyst.

An exhaust gas re-circulation passage 27, for guiding some of combusted exhaust gas generated in each of the cylinders 2, 3, 4 and 5 to the intake manifold 19, is also provided. An EGR cooler 28 for cooling down exhaust gas and an EGR valve 29 for controlling the flow rate of exhaust gas are interposed in the exhaust gas re-circulation passage 27, in the order mentioned here from the one at the exhaust manifold 24 side.

Additionally, the aforementioned engine 1, like a normal engine, is required to be forcibly rotated by an outer force upto the perfect ignition speed when it is restarted. A starter 30 is provided as a rotation drive mechanism for executing this control. Any starter with an appropriate structure can be employed as the starter 30. For example, an item can be employed having a structure where a pinion gear (not shown in the figure) is moved forward according to a start-up signal, and then the pinion gear is meshed (or engaged) with a ring gear (not shown in the figure) in the engine 1, thus the engine 1 is rotated under this condition.

The aforementioned engine 1 is designed for which a so-called economy running control is executed. The economy running control automatically stops the engine 1 when a predetermined condition, such as a condition in which the vehicle is at a stop state and a braking operation, is established. And it automatically restarts the engine when that stopping condition is cancelled, such as a condition in which the braking operation is cancelled. For these controls, an electronic engine control unit (E-ECU) 31 and an electronic economy running control unit (ECO-ECU) 32 are provided.

The electronic control units 31 and 32 is composed of a microcomputer as its main component. The electronic engine control unit 31 is designed so as to execute calculation based on an input data and to control running state of the engine 1. More specifically, the electric control unit 31 is designed such that the starter 30 is driven upon a start-up request, then that the gear is meshed with a gear at the engine 1 side and at the same time the engine 1 is cranked. Moreover, the electric control unit 31 is designed such that the fuel injection amount is controlled according to a request of acceleration or deceleration and such that the openings of the intake valve 23 and the EGR valve 29 are controlled as required. The electric control unit 31 is also designed such that the boost pressure by the supercharger 20 is controlled according to a request of acceleration or deceleration.

The electronic economy running control unit 32 is designed to execute a calculation based on the input and determine whether a stopping condition or restarting condition of the engine 1 is established. A stopping request or a restarting request of the engine 1 is output to the electronic engine control unit 31 according to the determination result. The stopping condition is, for example, a state where the vehicle speed is determined as zero and at the same time the braking operation is being executed. The starting condition is a state in which any of the stopping conditions becomes unsatisfied, for example, that the braking operation is released. The electronic engine control unit 31 executes control of stopping or starting of the engine 1, according to the request of stopping or starting the engine 1, when the request is issued. It is designed such that, if no such requests are issued, the output of the engine 1 (more specifically, the fuel injection amount) is controlled according to an amount of driving request which is represented by an accelezator opening.

For executing these controls, an accelerator opening sensor 33, a crank angle sensor 34 and a crank angle datum position sensor 35 are connected to the electronic engine control unit 31. Furthermore, though not specifically shown in the figure, another appropriate signal such as a vehicle speed signal is input into the electronic engine control unit 31 or the electronic economy running control unit 32.

The crank angle sensor 34 detects a rotation angle of a crank shaft (not shown in the figure) in the engine 1. It also detects the engine speed (or rotation number of the crankshaft) of the engine 1 by using the detected signal. As shown in FIG. 6, the crank angle sensor 34 is provided with a timing rotor 36 which rotates one revolution while the crank shaft rotates one revolution, and a pickup 37 placed in a predetermined position in the outer periphery side. The timing rotor 36 is a member of a disc-shaped or a gear shape, formed with protrusions or teeth at every predetermined angle degree (10 degrees for example) in the outer periphery. Some part of the outer periphery has a notched portion 38 where the protrusions or teeth are not formed. The pickup 37 is a so-called electromagnetic pickup designed so as to output a pulse signal each time it approaches and moves away from the protrusions or teeth of the timing rotor 36.

Therefore, the crank angle sensor 34 is designed so as to be capable of detecting a rotation angle degree of the crank shaft as an angle from the aforementioned notched portion 38. If explained more specifically, according to an example of four-cycle engine having four cylinders, when the pistons of two of the cylinders (for example, where ignition occurs first and third) reach their top dead centers at the same time, it means one of them has reached at the top dead center in the compression stroke, and the other is at the top dead center in the exhaust stroke. Therefore, a rotation angle of the crank shaft can be detected if a relative position of the notched portion 38 and the pickup 37 have been determined in advance so that their top dead centers are positioned at a predetermined angle (for example, at a 210-degree position) from the aforementioned notched portion 38.

The crank angle datum position sensor 35 is designed so as to complete one revolution while the crank shaft rotates two revolutions. In accordance with the structure, the sensor 35 provides a datum position of the angle for two revolutions of the crank shaft. As shown in FIG. 7, one protrusion 40 is formed in the outer circumference portion of a rotational member 39, for example a cam shaft timing pulley, which rotates one revolution while the crank shaft rotates two revolutions. A pickup 41 for outputting a pulse signal responding to the protrusion 40 is provided in the outer circumference side of the rotation member 39. Please note that the relative positions of the protrusion 40 and the pickup 41 are placed at a position where the protrusion 40 is detected by the pickup 41 while the crank shaft rotates predetermined angle degrees (for example, 120 degrees) when the pickup 37 in the aforementioned crank angle sensor 34 has detected the notched portion 38.

Therefore, an angle position of the crank shaft while it rotates two revolutions and the strokes of each of the cylinders can be detected by means of the crank angle sensor 34 and the crank angle datum sensor 35. In one example, when the aforementioned crank angle sensor 34 detects the aforementioned predetermined angle degrees (for example, 210 degrees) from the notched portion 38, each piston of the two cylinders is placed at each top dead center. If it is assumed that the protrusion 40 has been detected by the pickup 41 in the crank angle datum position sensor 35 during a rotation of the predetermined angle (210 degrees), it is determined that, for example, the piston of the cylinder with the first ignition order has reached the top dead center after having completed the compression stroke, and that the piston of the cylinder with the third ignition order has reached the top dead center after having completed the exhaust stroke. Also for the other cylinders, the strokes they are in are determined according to this procedure. Please note that an art, for example disclosed in Japanese Patent Laid-Open Publication No. Hei 11-62681, can be employed as an art like this for determining an angle position of a crank shaft and for determining cylinder injecting fuel based on the determined result.

As mentioned above, the engine 1 according to the invention determines a cylinder based on a signal (Signal Ne) from the crank angle sensor 34 and a signal (Signal G1) from the crank angle datum position sensor 35. Therefore, cylinder determination can be executed without fail if the crank shaft rotates two revolutions from its stop state. Cylinder determination can also be executed immediately after the crank shaft starts rotating at the stop angle position. In the same way, if the crank shaft rotates one revolution, the cam shaft 16 and the elliptic cam 17 integrally rotate 180 degrees while the crank shaft rotates one revolution. Therefore, fuel can also be delivered by pressure by means of the fuel pump 15 in accordance with a cylinder determination immediately after the aforementioned crankshaft has started rotating.

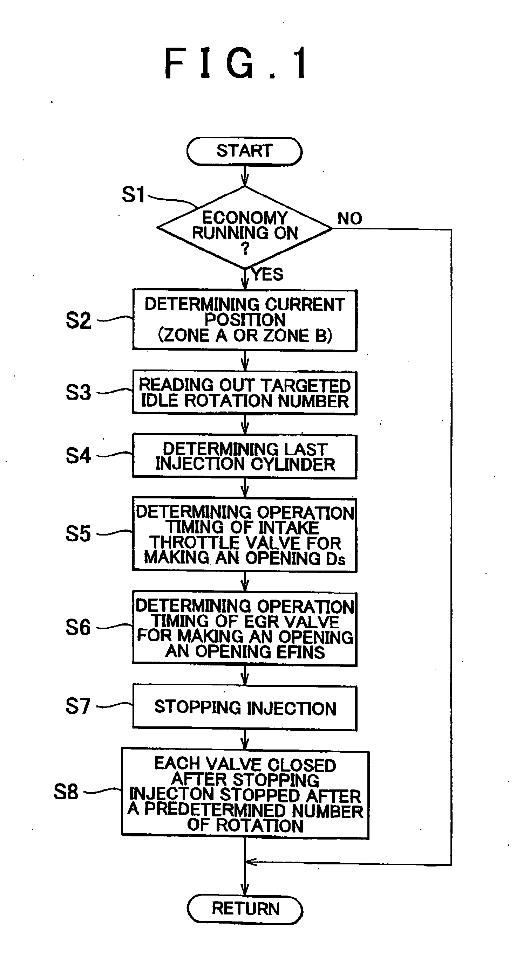

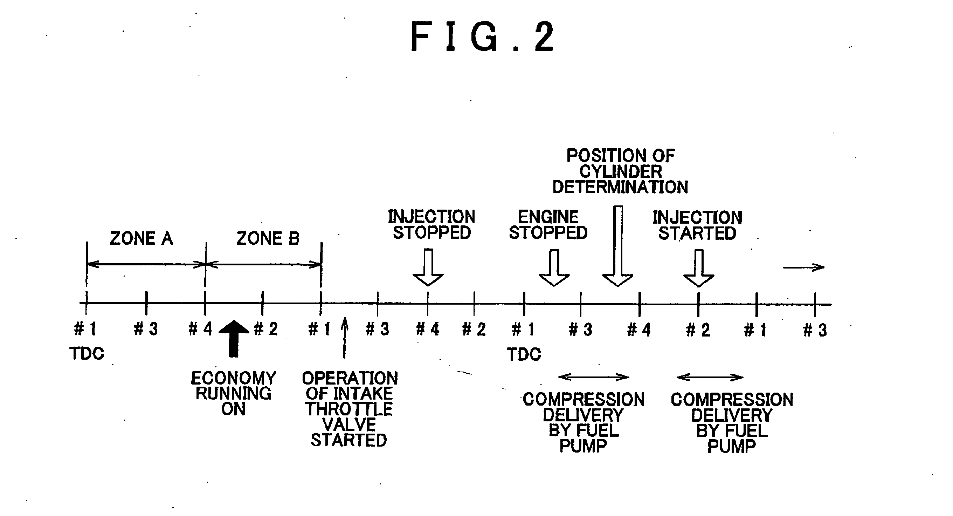

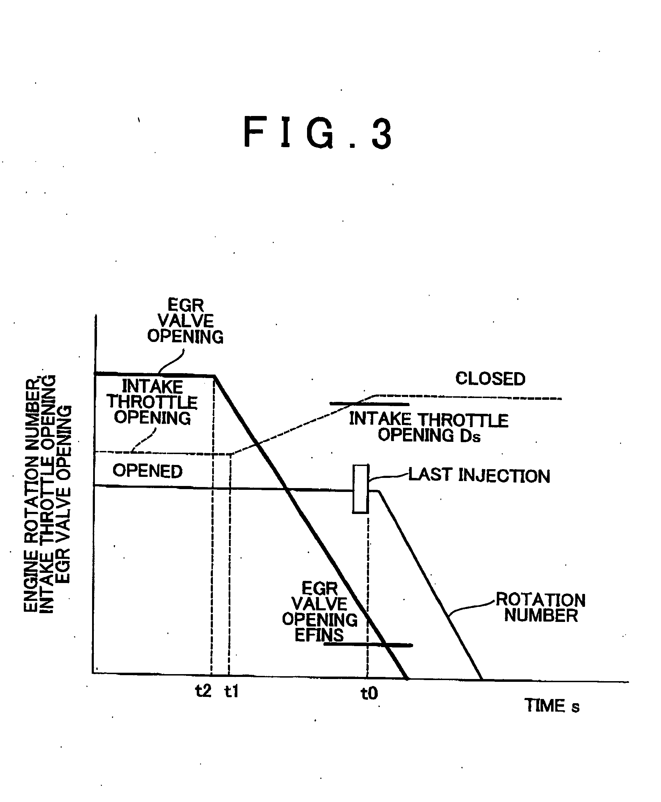

FIG. 1 or FIG. 3 conceptually shows an example of the control executed in the controller according to the invention. FIG. 1 shows a flow chart of the control. FIG. 2 and FIG. 3 show the time charts. First, the stop control according to the invention is executed by the economy running control which automatically stops the engine 1 if an operational condition of a vehicle equipped with the aforementioned engine 1 is established. Then, the economy running control automatically restarts the engine 1 when the condition does not become established. Therefore, first, it is determined whether a stop request (economy running ON) of the economy running control has been established or not (step S1). More specifically, it is determined whether a stop request signal is being input or not from the aforementioned electronic economy running control unit 32 into the electronic engine control unit 31. If negatively determined at step S1, the routine is terminated.

On the other hand, if the routine is positively determined at step S1 when a stop request of engine 1 is being established, the current rotation angle position of the crankshaft is determined (step S2). For example, it is determined whether the angle position has passed the compression top dead center (TDC) of #1 cylinder 2 and is within Zone A (from TDC of #1 cylinder 2 to TDC of #4 cylinder 5: see FIG. 2) which includes a rotation angle position before #4 cylinder 5 reaches the compression top dead center. Otherwise, it is determined whether the angle position has passed the compression top dead center (TDC) of #4 cylinder 5 and is within Zone B (from TDC of #4 cylinder 5 to TDC of #1 cylinder 2: sec FIG. 2) which includes a rotation angle position before #1 cylinder 2 reaches the compression top dead center. This step is executed for selecting a cylinder into which the fuel injection can be stopped earliest before the cylinder reaches the cylinder determination position.

In the next step, a targeted idle rotation number is read (step S3). The targeted idle rotation number is an idle rotation number provided according to an air conditioning compressor, a hydraulic pump for power steering or a load such as an electric load. In a case where the engine 1 is stopped by the economy running control in this step, the engine 1 always has an idle rotation number when it is just to be stopped, and the inertial energy of the engine 1 depends on the idle rotation number. Thus, rotation angle degrees it rotates from when the fuel injection is stopped and until when the engine 1 stops depends on the inertial energy. Consequently, reading out a targeted idle rotation number is required.

On the other hand, a rotation angle position where cylinder determination for the engine 1 can be executed has been a value predetermined based on the individual structures of the sensors 34 and 35. A rotation angle position where the fuel pump 15 delivers fuel by pressure has also been predetermined as mentioned above. Therefore, when the engine 1 is restarted, the rotation angle position where the fuel pump 15 is in the compression delivery stroke is determined at a timing of cylinder determination and immediately after that. Thus, the last fuel injection cylinder which sets the stop position of the crankshaft at such an angle position is determined (step S4). In other words, the angle created by inertial rotation of the engine 1 or the number of rotation when a fuel injection has just been stopped is determined based on the aforementioned targeted idle rotation number. In other words, a position where a fuel injection is set at a position which is ahead, by the angle the engine 1 inertially rotates, of the rotation angle position where the engine 1 should be stopped. An injection stop cylinder corresponding to the stop position can be thus determined.

Specific explanation will be made with reference to FIG. 2. The subject of an example is a four-cylinder engine wherein the fuel pump 15 enters its compression delivery stroke #2 cylinder 3 within a predetermined angle range including the compression top dead center, and also when #3 cylinder 4 within a predetermined angle range including the compression top dead center. The four-cylinder engine according to the example also enables the cylinder determination at a position 90-degree (in crank angle degree: CA) ahead of the compression top dead center of #1 cylinder 2, and at a position 90-degree (in crank angle degree: CA), ahead of the compression top dead center of #4 cylinder 5. The engine 1 stops at a position where the crank angle has passed the compression top dead center of one of the cylinders. Thus, the stop position where cylinder determination can be executed early at a timing where the stopped engine 1 is restarted is a position where the crank angle has passed the compression top dead center of #1 cylinder 2.

As shown in FIG. 2, assume that a stop request (economy miming ON) of the engine 1 is issued in Zone B and that the idle rotation number at that time is such a degree in which the engine is stopped after an inertial rotation of the crank shaft of around one revolution. In this case, a cylinder which is ahead of the cylinder by one revolution whose compression top dead center is the most recent to the targeted stop rotation angle position is set as a cylinder whose injection is to be stopped.

In this way, the engine 1 stops at a rotation angle position where the crank angle has passed a compression top dead center of #1 cylinder 2. If the engine 1 is cranked to restart under this state, cylinder determination is executed at a timing of a revolution of 180 degrees. Thus, #2 cylinder 3 is the cylinder into which fuel can be subsequently injected. As mentioned above, the fuel pump 15 enters a pressure delivery stroke in a predetermined angle range which includes the compression top dead center of #2 cylinder 3. Thus, #2 cylinder 3 can be supplied with fuel under sufficiently high pressure. As a result, the engine 1 can be immediately brought into the perfect ignition state. In other words, restarting of the engine can be rapidly executed without causing a delay.

After the last injection cylinder has been determined, an operation timing of the intake throttle valve 23 is determined (step S5) such that the opening of the intake throttle valve 23 at the last injection is the same as or around the opening Ds that is smaller than the opening for idling operation and that can assure an intake air of such a degree not causing a misfire in the last injection cylinder. Note that the opening Ds of the intake throttle valve 23 may be a fixed value as a predetermined opening, or may be a value which changes according to the fuel injection amount, engine water temperature or other factors.

Additionally, the operation timing of the intake throttle valve 23 can be determined based on the difference between the current opening of the intake throttle valve 23 and the opening Ds given at the last injection timing, or the current opening, and the operation speed of the intake throttle valve 23. This control is executed for the purpose of stopping the engine 1 without fail at a targeted rotation angle position and for stopping the air intake immediately after the fuel injection is stopped, by reliably combusting the last combustion fuel and keeping the energy generated accordingly generated not to be increased too much.

Furthermore, in accordance with the aforementioned step S5 control, an operation starting timing is determined (step S6) for lowering the EGR valve 29 to the predetermined opening Efins, in order to keep the circulated exhaust gas amount at the last fuel injection timing to be a predetermined small amount. The predetermined opening Efins is such an opening to secure a circulated exhaust gas amount that brings combustion of certain slowness so as not to increase the NOx amount even if fuel has been injected in a state where an intake air has been throttled as mentioned above. The opening may be an opening which changes according to a predetermined opening or to fuel injection amount, engine water temperature or some other factors.

Moreover, the operation timing can be determined based on the difference between a current opening of the EGR valve 29 and a predetermined opening Efins which has been provided at the last fuel injection, or a current opening, and the operation speed of the EGR valve 29. Execution of this control can prevent or restrain a fuel of the last injection from drastically combusting and concurrently causing a combustion noise (i.e. diesel knock). Furthermore, this control is executed for the propose of stopping the exhaust circulation immediately after the fuel injection is stopped.

Then, fuel injection is stopped at the timing determined by step S4 (step S7). In accordance with this, or after the injection is stopped, the intake throttle valve 23 and the EGR valve 29 are closed, and the air intake and exhaust circulation are stopped. In this state, the engine 1 keeps rotating the predetermined degrees due to the idle rotation, then finally the engine 1 stops (step S8). Therefore, as the cylinder is not supplied with air or exhaust gas after the fuel injection is stopped, compression or expansion of air or exhaust gas, or fluctuation of engine torque caused by the compression or expansion of air of exhaust gas, is prevented or restrained. As a result, the engine 1 smoothly stops without causing vibration.

In a concrete example shown in FIG. 2, where #4 cylinder 5 is regarded as the last injection cylinder, a control is started for changing the openings of the intake throttle valve 23 and the EGR valve 29 at a timing where fuel is injected into #4 cylinder 5, such that their openings at each of the predetermined timings have the aforementioned predetermined opening, Ds and Efins, respectively. In the example shown in FIG. 2, control of the opening of the intake throttle valve 23 is started at a timing where the crank angle has passed by around 90 degrees CA from the compression top dead center of the #1 cylinder 2.

This control can be illustrated as fluctuation of the opening as shown in FIG. 3. Fuel injection timing for the #4 cylinder 5, the last cylinder, is determined by the crank angle. It is supposed here that the determined timing corresponds to t0. In order to control the opening of the intake throttle valve 23 so as to have the aforementioned predetermined opening Ds at the timing of t0, a control for changing the opening should be started at the timing of t1. The t1 timing is determined based on the current opening and the fluctuated speed of the intake throttle valve 23. Additionally, FIG. 3 also shows the fluctuated opening of the EGR valve 29. In order to control the opening such that it has an opening of around Efins, the predetermined opening mentioned above, at the timing of t0, a throttle control of the EGR valve should be started at the timing of t2. The t2 timing is determined based on the current opening and the operation speed of the EGR valve 29.

Controlled in this way, the intake air amount at the last fuel injection timing t0 is smaller than the amount of those for idling state. As a result, fuel can be combusted without increasing smoke emission, and furthermore, the concurrent rotation number of the engine 1 will not specially increase. Therefore, the engine 1 can be reliably stopped after it has rotated a predetermined number of rotations. Additionally, when the intake throttle valve 23 is closed when a fuel injection has been stopped, the throttle valve has already been closed in a certain degree when the last injection is executed. As a result, even if the engine 1 keeps rotating even after the fuel injection, the intake air can be prevented or restrained from being compressed or expanded. Thus, fluctuation of engine torque and the resultant vibration can be avoided because the intake throttle valve 23 can be closed immediately after the last injection.

Moreover, in a similar way, because the EGR valve 29 opening is maintained in the predetermined opening Efins when it is at t0, the timing of the last fuel injection, the fuel is combusted under a state where a circulated exhaust gas amount of some degree is being secured. Therefore, the fuel is restrained from being drastically combusted and thus the combustion noise (i.e. diesel knock) can be prevented. And after that, when the EGR valve 29 is closed, the EGR valve 29 can be closed immediately after the last injection because the opening has already been decreased. As a result, even if the crankshaft keeps rotating even after fuel injection is stopped, the intake gas can be prevented or restrained from being compressed or expanded. Therefore, fluctuation of engine torque and the resultatnt vibration can be avoided.

Please note that, though the concrete example mentioned above shows an example for controlling both of the intake air amount and circulated exhaust gas amount when the engine 1 takes a stop control, the invention is not limited to the aforementioned concrete example. The invention may have a structure where only either of intake air amount or circulated exhaust gas amount is controlled. For example, the invention may have a structure where the total amount of intake air and circulated exhaust gas is decreased from those for the idling state. Furthermore, though the invention is especially effective in a stop controller for diesel engines, it can also be applied to a controller for other reciprocating engines, including gasoline or gas engines as an internal combustion engine, covered by the invention. Furthermore, although the concrete example mentioned above is an example for a four-cylinder engine, the invention is not limited to the aforementioned concrete example and may also be applied to a stop controller for engines which have a plurality of cylinders. Moreover, means for determining cylinders of an internal combustion engine covered by the invention is not limited to the concrete examples mentioned above, and may have an appropriate structure.
The invention is constructed such that an air amount and a circulated exhaust gas amount are controlled in accordance with a fuel supply when an internal combustion engine (1) is stopped. More specifically, the invention is a stop controller for an internal combustion engine (1) for controlling fuel injection such that the internal combustion engine (1) is stopped at a predetermined rotation angle position, which is provided with air intake controlling means for controlling an intake air amount at a timing of last fuel injection such that the amount is smaller than one in an idling state and prevents a misfire. Furthermore, the stop controller for an internal combustion engine (1) is provided with an exhaust gas circulation system for circulating a part of exhaust gas into an intake air side, and exhaust gas controlling means for controlling an circulated exhaust gas amount in the aforementioned exhaust gas circulation system for a last fuel injection such that the amount is smaller than the circulated amount before the last fuel injection is executed.

## Claims

1. A stop controller (31) for an internal combustion engine (1), for controlling fuel injection in the internal combustion engine (1) such that a crankshaft of the internal combustion engine (1) is stopped at a predetermined rotation angle position, **characterized by** comprising:
air intake controlling means for controlling an intake air amount introduced in the internal combustion engine (1) at a timing of a last fuel injection so that the intake air amount is smaller than an amount for an idling state of the internal combustion engine (1) and prevents a misfire.

2. The stop controller (31) for the internal combustion engine (1) according to Claim 1, **characterized in that**:
the air intake controlling means restrain an intake air amount introduced in the internal combustion engine (1) at a timing of a last fuel injection so that the intake air amount is smaller than an amount for an idling state of the internal combustion engine (1) and prevents a misfire.

3. The stop controller (31) for the internal combustion engine (1) according to any one of Claims 1, 2, **characterized in that**:
the air intake controlling means controls intake air so as to be interrupted after the last fuel injection.

4. The stop controller (31) for the internal combustion engine (1) according to Claim 1, **characterized in that**:
the internal combustion engine (1) is automatically stopped if a predetermined driving condition is established and is automatically restarted if the predetermined driving condition is released, and
the air intake controlling means executes a control of the intake air amount during a time after the predetermined driving condition is established and until the internal combustion engine (1) is automatically stopped.

5. The stop controller (31) for the internal combustion engine (1) according to any one of Claims 1-4, **characterized in that**:
the air intake controlling means is provided with intake air amount adjusting means capable of adjusting intake air amount introduced into the internal combustion engine (1).

6. The stop controller (31) for the internal combustion engine (1) according to Claim 5, **characterized in that**:
the intake air amount adjusting means is an intake valve (23) which is opened and closed for adjusting the intake air amount.

7. The stop controller (31) for the internal combustion engine (1) according to Claim 6, **characterized in that**:
the air intake controlling means controls the intake valve (23) so as to have a predetermined opening (Ds) at a predetermined timing.

8. The stop controller (31) for the internal combustion engine (1) according to Claim 7, **characterized in that**:
the predetermined opening (Ds) is a predetermined value so that the intake air amount is smaller than those for idling state and prevents a misfire.

9. The stop controller (31) for the internal combustion engine (1) according to Claim 7, **characterized in that**:
the predetermined opening (Ds) is a value which fluctuates according to fuel injection amount or temperature of the internal combustion engine (1).

10. The stop controller (31) for the internal combustion engine (1) according to Claim 7, **characterized in that**:
the predetermined timing is determined based on an opening of the intake valve (23) immediately before the intake air amount is to be controlled by the air intake controlling means, and on a speed of opening and closing of the intake valve.

11. A stop controller (31) for the internal combustion engine (1) for controlling fuel injection in the internal combustion engine (1) so as to stop a crankshaft of the internal combustion engine (1) at a predetermined rotation angle position, the internal combustion engine (1) comprises:
an exhaust gas circulation system (27, 28, 29) for circulating a part of exhaust gas of the internal combustion engine (1) into an intake air side of the internal combustion engine (1), **characterized by**:
exhaust gas controlling means for controlling a circulated exhaust gas amount in the exhaust gas circulation system (27, 28, 29) at a timing of last fuel injection, to an amount smaller than a circulated amount before the last fuel injection.

12. The stop controller (31) for the internal combustion engine (1) according to Claim 11, **characterized in that**:
the exhaust gas controlling means decrease a circulated exhaust gas amount in the exhaust gas circulation system (27, 28, 29) at a timing of last fuel injection, to an amount smaller than a circulated amount before the last fuel injection.

13. The stop controller (31) for the internal combustion engine (1) according to Claim 11, **characterized in that**:
the internal combustion engine (1) is automatically stopped if a predetermined driving condition is established and automatically restarted if the predetermined driving condition is released, and
the exhaust gas controlling means executes a control of the circulated exhaust gas amount during a time after the driving condition is established and until the internal combustion engine (1) is automatically stopped.

14. The stop controller (31) for the internal combustion engine (1) according to any one of Claims 11-13, **characterized in that**:
the exhaust gas controlling means is provided with the exhaust gas amount adojusting means capable of adjusting the circulated exhaust gas amount circulated into the internal combustion engine (1).

15. The stop controller (31) for the internal combustion engine (1) according to Claim 14, **characterized in that**:
the exhaust gas amount adjusting means is an exhaust valve (29) which is opened and closed for adjusting the circulated exhaust gas amount.

16. The stop controller (31) for the internal combustion engine (1) according to Claim 15, **characterized in that**:
the exhaust gas controlling means controls the exhaust valve so as to have a predetermined opening (Ds) at a predetermined timing.

17. The stop controller (31) for the internal combustion engine (1) according to Claim 16, **characterized in that**:
the predetermined opening (Ds) is a value predetermined such that the circulated exhaust gas amount is smaller than a circulation amount before the last fuel injection.

18. The stop controller (31) for the internal combustion engine (1) according to Claim 16, **characterized in that**:
the predetermined opening (Ds) is a value which fluctuates according to fuel injection amount or temperature of the internal combustion engine (1).

19. The stop controller (31) for the internal combustion engine (1) according to Claim 16, **characterized in that**:
the predetermined timing is determined based on an opening of the exhaust valve (29) and a speed of opening and closing of the exhaust valve (29) immediately before they are controlled by the exhaust gas controlling means.

20. A stop controller (31) for the internal combustion engine (1) for controlling fuel injection in the internal combustion engine (1) so as to stop a crankshaft of the internal combustion engine (1) at a predetermined rotation angle position, the internal combustion engine (1) **characterized by** comprises:
an exhaust gas circulation system (27, 28, 29) for circulating a part of exhaust gas of the internal combustion engine (1) into an intake air side of the internal combustion engine (1); and
exhaust gas controlling means for controlling exhaust gas circulation so as to be interrupted after the last fuel injection.

21. A stop controller (31) for the internal combustion engine (1) for controlling fuel injection in the internal combustion engine (1) so as to stop a crankshaft of the internal combustion engine (1) at a predetermined rotation angle position, the internal combustion engine (1) **characterized by** comprises:
an exhaust gas circulation system (27, 28, 29) for circulating a part of exhaust gas of the internal combustion engine (1) into an intake air side of the internal combustion engine (1):
air intake controlling means for controlling an intake air amount introduced in the internal combustion engine (1) at a timing of a last fuel injection so that the intake air amount is smaller than an amount for an idling state of the internal combustion engine (1) and prevents a misfire; and
exhaust gas controlling means for controlling exhaust gas circulation so as to be interrupted after the last fuel injection.

22. The stop controller (31) for the internal combustion engine (1) according to any one of Claims 20, 21, **characterized in that**:
the exhaust gas controlling means is provided with the exhaust gas amount adjusting means capable of adjusting circulated exhaust gas amount circulated into the internal combustion engine (1).

23. The stop controller (31) for the internal combustion engine (1) according to Claim 22, **characterized in that**
the exhaust gas amount adjusting means is an exhaust valve (29) which is opened and closed for adjusting the circulated exhaust gas amount.

24. The stop controller (31) for the internal combustion engine (1) according to Claim 21, **characterized in that**:
the air intake controlling means is provided with intake air amount adjusting means capable of adjusting intake air amount introduced into the internal combustion engine (1).

25. The stop controller (31) for the internal combustion engine (1) according to Claim 24, **characterized in that**:
the intake air amount adjusting means is an intake valve (23) which is opened and closed for adjusting the intake air amount.
